Europäisches Patentamt

(19) European Patent Office

Office européen des brevets

(11) Publication number: **0 083 701**
**A2**

# (12) EUROPEAN PATENT APPLICATION

(21) Application number: **82110231.6**

(22) Date of filing: **06.11.82**

(51) Int. Cl.³: **B 60 K 37/00**

(30) Priority: **19.11.81 IT 6849981**

(43) Date of publication of application:
**20.07.83 Bulletin 83/29**

(84) Designated Contracting States:
**DE FR GB SE**

(71) Applicant: FOGGINI & C. S.r.l.
Via Aosta, 18
I-10092 Beinasco Torino(IT)

(72) Inventor: Foggini, Massimo
Strada Privata Santa Brigida, 131
I-10024 Moncalieri Torino(IT)

(74) Representative: Modiano, Guido et al,
MODIANO, JOSIF, PISANTY & STAUB Modiano &
Associati Via Meravigli, 16
I-20123 Milan(IT)

(54) Instrument mounting dashboard, particularly for motor vehicles.

(57) The dashboard comprises a plurality of modular elements (ES,EI), each formed from a polymeric -- preferably thermoplastic -- material, which are assembled together to form a central load-bearing structure that can be set up in various configurations and sizes; with the plurality of modular elements there being associated a pair of angle elements (EA) and a windshield connection element (ER) intended for tailoring the central structure to the different types of vehicles.

Fig. 7a

EP 0 083 701 A2

COMPLETE DOCUMENT

This invention relates to an instrument mounting dashboard, particularly for motorvehicles.

As is known, instrument mounting dashboards are currently fabricated from a polymeric material by direct moulding in one piece, in general with the incorporation, during the load bearing insert moulding step, of the outer covering and of a soft layer interposed between the covering and insert. The above prior procedure, while affording dashboards having adequate features to meet the application requirements and in general highly appreciable from the functional and aesthetic points of view, have several disadvantages. First, the considerably large dimensions of the dashboard require the use of expensive moulding equipment and fairly sophisticated moulding techniques, in order to avoid imperfections due to material shrinkage or other similar flaws which are the more frequently found the larger are the dimensions of the final product. Moreover, such conventional methods are extremely rigid, in the sense that they allow no variations in the shapes and/or dimensions and/or character of the material employed. In particular, the shapes and dimensions of the finished dashboard are strictly dependent on the mould, so that any change in the former would involve a corresponding change in the latter. Thus, it will be readily appreciated that this affects adversely the cost of the final product, while appreciably restricting the possibility of keeping motorvehicles up to date in style and functionality.

This drawback connected with shape rigidity is particularly evident where, for given dimensions and any other characteristics, it becomes necessary to provide instrument mounting dashboards for passenger cars with right- instead of left-hand drive; the mass fabrication, generally on a very small scale, of such dashboards involving the availability of correspondingly modified moulds.

Another disadvantage is that the size of modern one-piece construction dashboards requires an adequately thick material to provide a correspondingly adequate rigidity of the article of manufacture, thereby self-supporting features can be ensured. Such substantial thickness, additionally to appreciably increasing the weight and cost of the article of manufacture, poses considerable moulding problems because, as is known, shrinkage phenomena are the more aggravated and harmful the larger is the volume of the material being processed.

This invention, taking the steps from a realization of such drawbacks, is essentially directed to remove them.

In particular, the task of the invention is that of appreciably simplifying the moulding processes, while reducing manufacturing costs and allowing a wider range of embodiments of the article of manufacture, which can be easily modified as regards dimensions, shape, character of the material, coverings, and colours, by virtue of an assembly construction with modular elements.

According to one aspect of the invention this task is achieved by an instrument mounting dashboard, particularly for motorvehicles, characterized in that it comprises a plurality of assemblable modular elements, each moulded from a polymeric material, said modular elements being effective to be assembled together to form the middle load-bearing structure of the dash-board, a pair of fixed non-modular angle elements and a non-modular windshield connection element provided for association with said plurality of modular elements, said non-modular elements being so arranged as to adapt the composite middle structure to different vehicle types and having such a shape and dimension related to the corresponding shape and dimensions of each individual motorvehicle.

The plurality of assemblable elements comprise at least one element intended for accommodating the instruments, which element may be placed indifferently to the left or right of the dashboard depending on the corresponding placement of the driver seat in combination with one or more central and/or lateral similar or different elements. Each modular element is preferably formed by injection moulding from a thermoplastics material and may incorporate the outer covering and interposed soft layer, if any. The character, colour and texture of the covering may vary between the elements to permit correspondingly varied styling arrangements.

The pair of non-modular angle elements preferably include usual accessory items, and specifically such elements will include pre-assembled forced air diffusers with their unions for connection to their respective conveying hoses.

In a similar manner, the windshield connection element will have preformed therein the defroster outlets and respective fittings for the hose ducting.

A specially advantageous embodiment of this invention provides six modular elements divided into three upper elements and three lower ones which can be variously combined together and interconnected as by riveting, preferably with the interposition of a foam layer.

Those elements which make up the upper assembly comprise a central element and two lateral elements, at least one of which is provided with an instrument enclosing space.

Those elements which make up the lower assembly comprise: a lateral element intended for the drive side and incorporating a tunnel panel for the steering column; a central element intended for merging with or incorporating the centrally located driveshaft tunnel covering locker, if provided; and a second lateral element for the side away from the drive side. All of the elements which form the framing structure may be provided with a variety of accessory items, such as doors, niches for wireless sets, air-conditioning outlets, ashtray, cigar lighter, and the like.

The composite dashboard of this invention is secured to the car body, following assembling of the dashboard itself, in the usual manner, by means of brackets and/or stud bolts.

Further features and advantages will be apparent from the detailed description which follows, with reference to the accompanying drawings illustrating one exemplary embodiment of the invention and where:

Figure 1 is a perspective view illustrating schematically the structural arrangement of a dashboard for passenger cars according to this invention, in an embodiment thereof which comprises a three upper element assembly and three lower element assembly, the elements being all of the modular type, as well as fixed elements;

Figure 2 is a detail perspective, partly exploded, view of a fixed lateral element;

Figure 3 is a detail perspective view of the fixed, non-modular, windshield connection element;

Figures 4a-4b are detail perspective views of a lateral, respectively central, element employed to form the upper assembly of the dashboard;

Figures 5a-5b-5c are detail perspective views of respectively a lower lateral element intended for the drive station, a central and/or lateral element, and a lateral element away from the drive seat or station;

Figures 6a-6b-6c-6d-6e-6f are perspective views of as many instrument mounting dashboards obtained by variously combining together the upper and lower modular elements of the two assemblies respectively shown in Figures 4 and 5;

Figures 7a-7b-7c-7d are similar perspective views showing corresponding dashboards which are further differentiated from one another from the interior styling standpoint;

Figure 8 is a front elevation view of a dashboard according to the invention, with its basic structure completed and ready to receive the instruments and interior fittings;

Figure 9 is a cross-sectional view taken along the line IX-IX of Figure 8 to an enlarged scale, which shows in detail a method of connecting the various elements; and

Figure 10 is a sectional view taken along the line X-X of Figure 9.

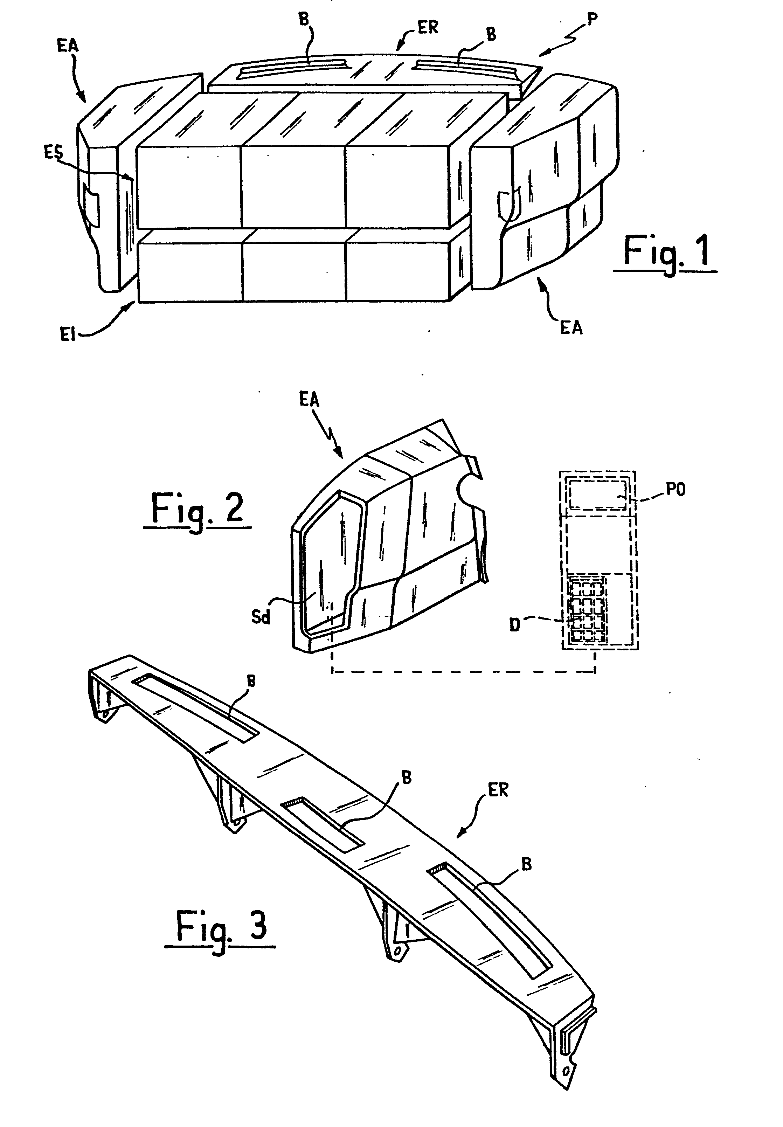

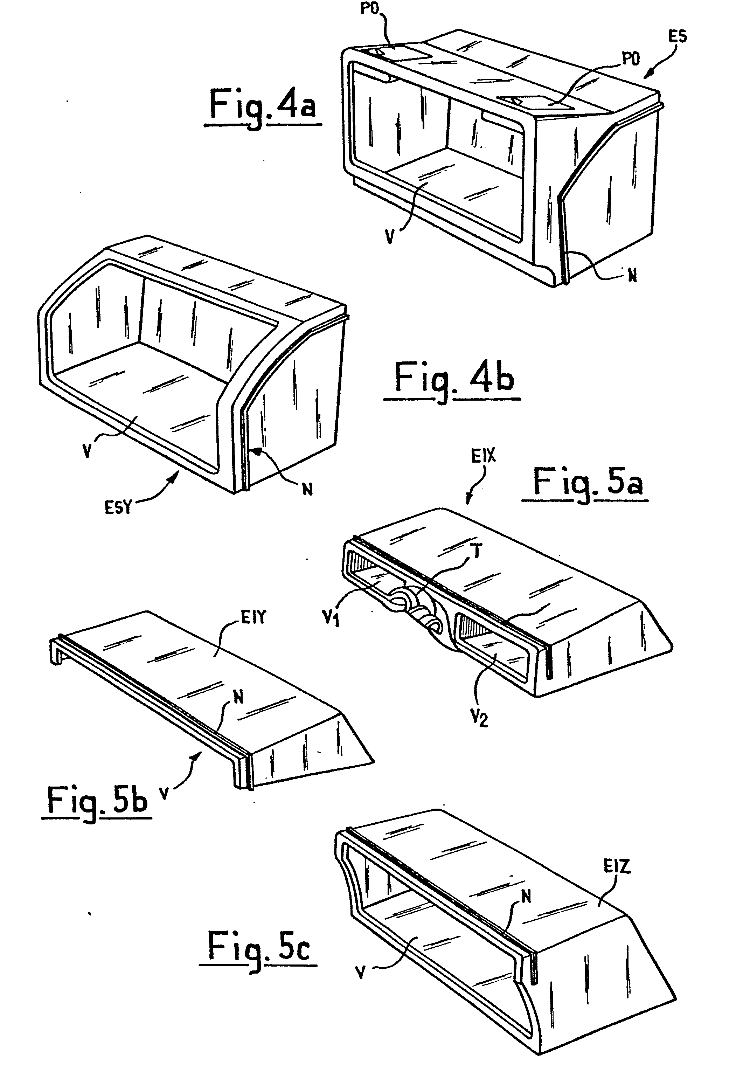

With initial reference to Figures 1 to 5, the reference character ES designates the upper modular element assembly, EI designates the lower modular element assembly, EA designates the fixed, non-modular, lateral elements, and ER designates the windshield connection element. Said elements, when variously combined and assembled together, as will be explained hereinafter, make up an instrument mounting dashboard generally indicated at P, whose overall dimensions and contour are univocally defined by the corresponding dimensions and contours of the fixed non-modular elements EA-ER, which will vary between motorvehicles.

The cited fixed elements EA-ER also serve the function of supporting elements for the forced-air dispensers. More precisely, the angle elements EA have inserted therein, either in corresponding seats Sd or partly formed by co-moulding, the lateral forced-air diffusers D, while the connection element ER carries the windshield defrosting outlets B; the diffusers and outlets being provided with fittings (not shown) for connection to respective conveying hoses.

The two central assemblies ES-EI make up the load-bearing framework of the dashboard P while being constructed to provide a series of spaces and blanks for instruments and accessories of various description.

The upper assembly ES comprises of preference two elements selected from a group comprising a lateral and/or central element ESX having a space V adapted for containing the instruments, and hence in all cases located of necessity at the drive side, and an element ESY also positionable at the middle of the dashboard, or even laterally but away from the drive side. The element ESX is also provided with ashtray spaces Po, and the element ESY has a space V formed therein, and in the embodiment shown, has a partly arcuate shape.

The lower assembly EI preferably comprises elements selected from a group comprising: a solely lateral element EIX intended for the drive side and incorporating a tunnel panel T for shielding the steering column; a first element EIY for central and/or lateral installation excepting the drive side; a second element EIZ also for central and/or lateral installation, excepting the drive side. The elements EIY and EIZ differ from each other by the provision of a space V which is open in the former and closed in the latter; the element EIX is instead provided with a pair of spaces $V_1-V_2$ located on the sides of the panel T.

0083701

Of course, the shapes and contours of the elements in the two assemblies ES-EI are not limited to the exemplary ones just described, as other shapes are obviously feasible within the same modular principle on which the instant invention is based.

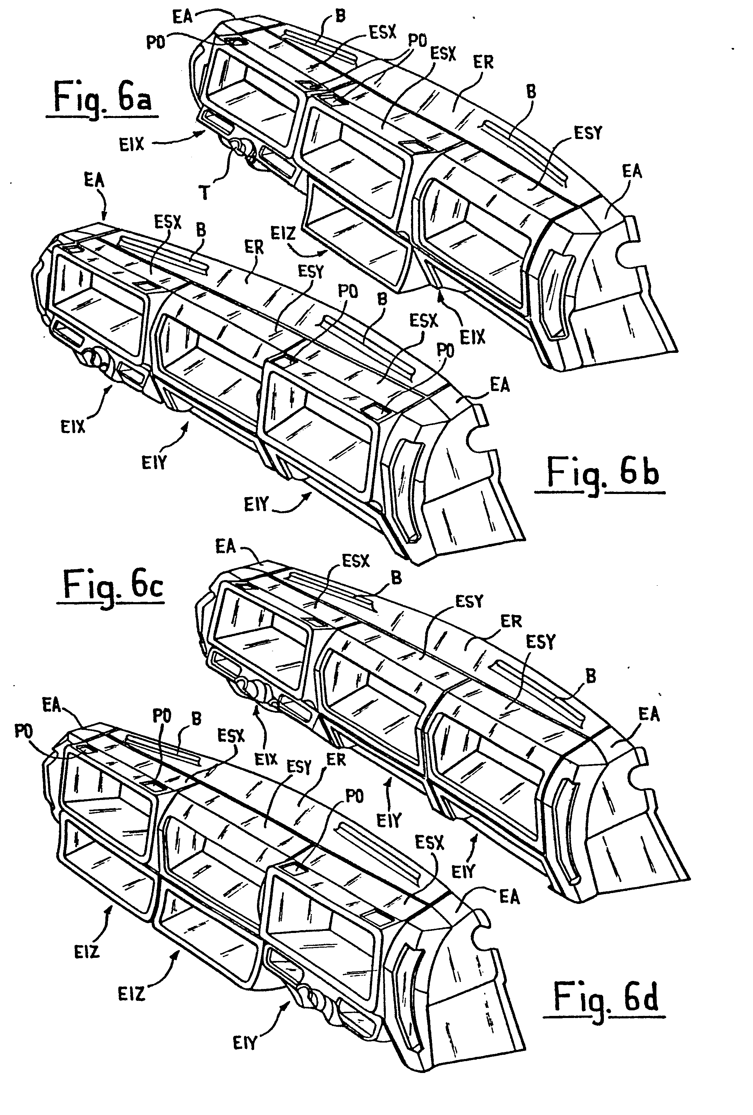

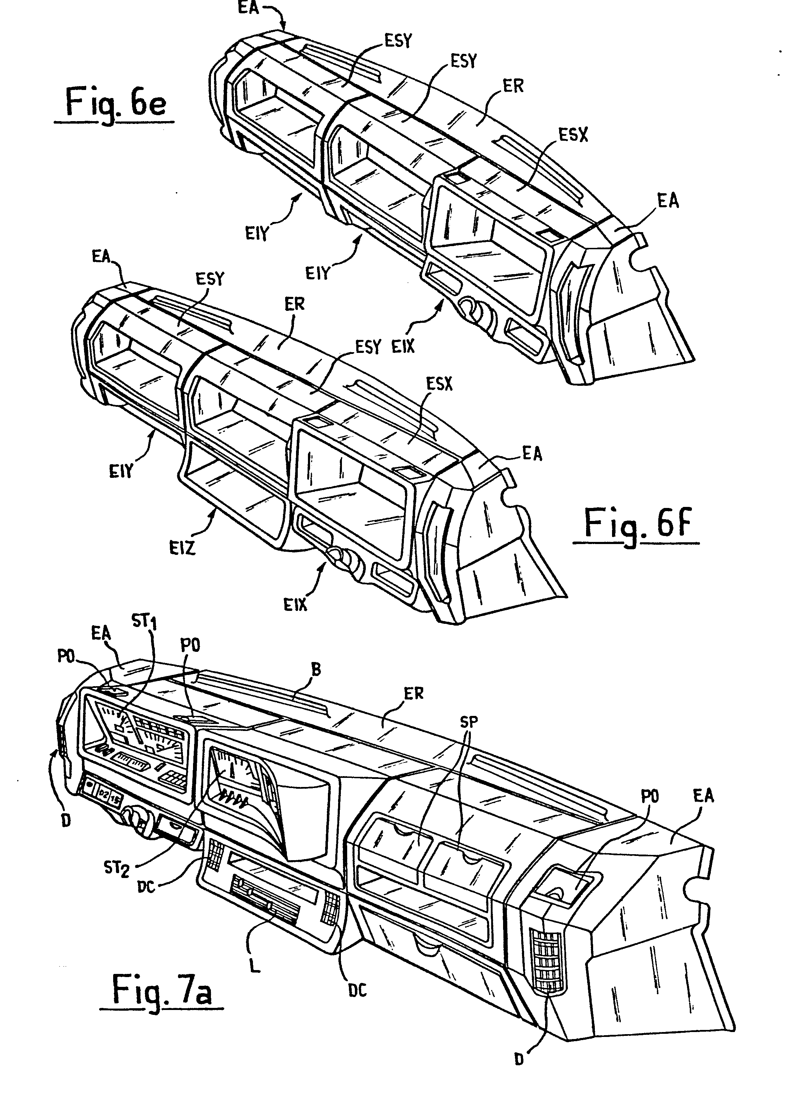

Figures 6a and 6f show some combinations of the elements described and the corresponding dashboard frameworks -- less interior styling items -- resulting from said combinations.

The patterns which follow illustrate said possible but not sole combinations:

| | UPPER ASSEMBLY ES | | | LOWER ASSEMBLY EI | | |
|---|---|---|---|---|---|---|
| Figure 6a | X | X | Y | X | Z | Y |
| Figure 6b | X | Y | X | X | Y | Y |
| Figure 6c | X | Y | Y | X | Y | Y |
| Figure 6d | X | Y | X | Z | Z | X |
| Figure 6e | Y | Y | X | Y | Y | X |
| Figure 6f | Y | Y | X | Y | Z | X |

It will be noted that Figures 6a-6b-6c refer to dashboard structures for left-hand drive motorvehicles, whereas Figures 6d-6e-6f refer to dashboard structures for right-hand drive motorvehicles; the perfectly equivalent right- and left-hand constructions being made possible by the modular principle on which this invention stands.

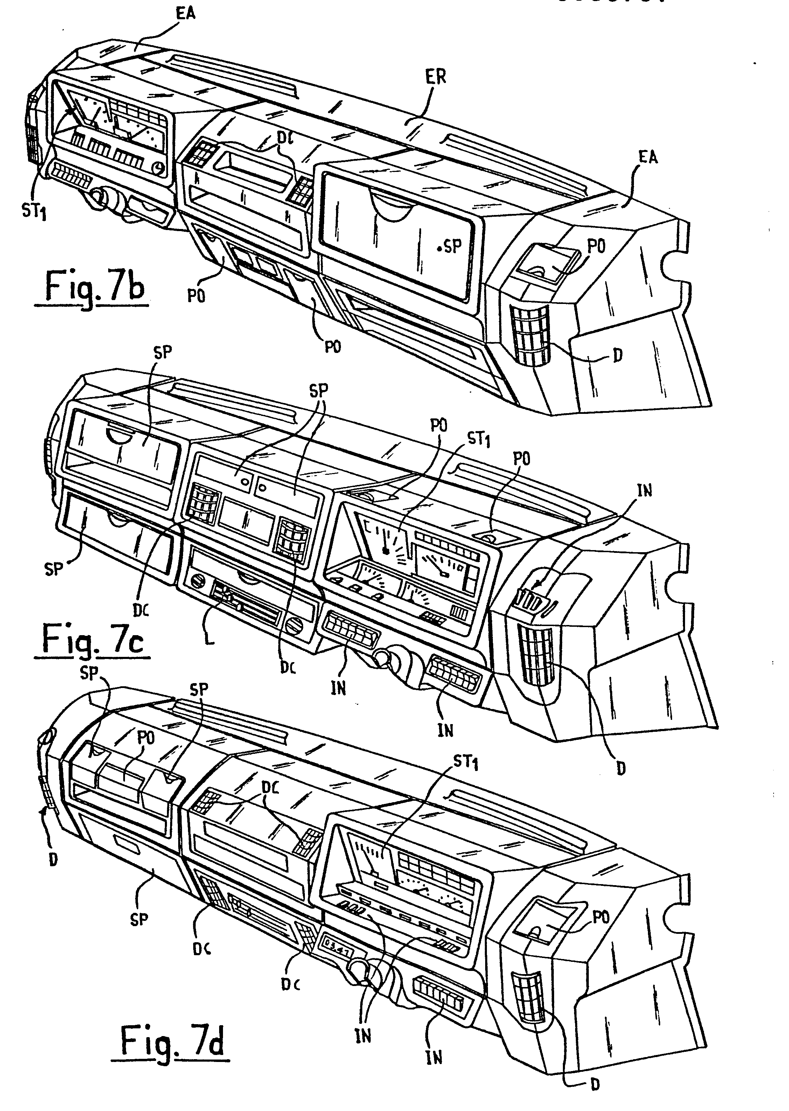

In Figures 7a to 7d, there are shown different possible equipment designs for the dashboard framework illustrated in the preceding Figures 6. More precisely, Figure 7a shows a framework of the type illustrated in Figure 6a, wherein both of the lateral and central

0083701

elements ESX are utilized for accommodating instrumentation units $ST_1$–$ST_2$, whereas the lateral element ESY, having doors SP, is used as a partly open-view locker. That same figure also shows the utilization of the lower element EIZ for enclosing linkages L for controlling the outflow of the conditioned air and central ventilation diffusers DC. Figure 7b illustrates a modified arrangement in which the element ESX away from the drive side is utilized as a hold-all space closed by a door SP. The figure also shows a different use for the lower elements EIY and EIZ, one of which is fitted out as an ashtray and digital clock, the other being an open view locker or glove compartment. Figures 7c and 7d, which are self-explanatory, illustrate similar setups for dashboards with right-hand drive station.

All of the elements in the series ES–EI, as well as the angular elements EA and connection element ER, are moulded from a polymeric material, advantageously on account of the small size, from an injection moulded thermoplastic material. These manufacturing techniques allow a wide range of variations in the setups of the elements, under the profile of the outer coverings used and of the application procedures thereof. First of all, in fact, it will be possible to provide a sole covering of the dashboard, after the final assembling of its component elements. The covering application may be carried out in this case through conventional upholstery installation procedures, or alternatively, by vacuum forming methods, using the framework itself as a plug. But more advantageously, each element will be covered separately, so as to provide for wider setup possibilties. Furthermore, if so required by considerations of an aesthetic character, some elements may be used without a covering, to optionally receive, during the moulding step, a surface treatment of texturing, scoring, knurling, and the like. The coverings of the elements may be produced by co-moulding with laminates and the like, with the interposition of foam layers, and it is apparent that the type of calendered or the like may be diversified for each of the contiguous elements, and as regards colour, thickness, and texture. Combinations of various kinds can be easily implemented, as the expert in the art will readily recognize.

The component elements of the dashboard, whether covered or bare, are assembled together by means of fasteners of any suitable kind, expediently by means of rivets RV, following prior interposition, between contiguous elements, of a thin foam layer ST intended to both prevent squeaking noise and air leaks from any air conditioning and/or ventilation ducting.

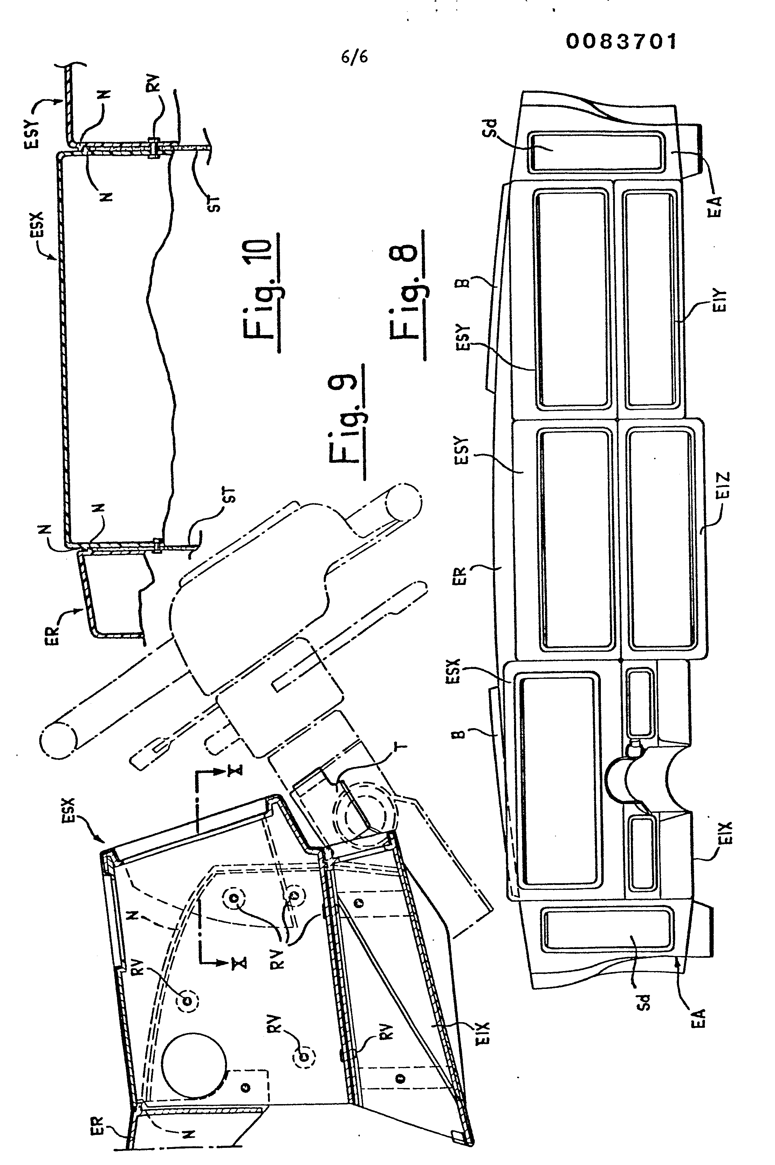

To facilitate the connection and mutual positioning of the dashboard component elements, said elements are provided with raised side ribs N so profiled as to afford mutual rabbeted engagement of contiguous elements, as clearly shown in Figures 9 and 10.

The composite dashboard of this invention is secured to the car body of the vehicle, after assembling together the various elements that make it up, in a conventional manner through the use of brackets, bolts, and/or stud bolts, according to the seats and securing members pre-arranged on the car body.

Of course, within the principle underlying this invention, constructional details and the embodiments may be largely varied with respect to what has been described and illustrated by way of example and not of limitation, without departing from the invention scope.

## CLAIMS

1. An instrument mounting dashboard, particularly for motorvehicles, characterized in that it comprises a plurality of assemblable modular elements (ES,EI), each moulded from a polymeric material, said modular elements being effective to be assembled together to form the middle load-bearing structure of the dashboard, a pair of fixed non-modular angle elements (EA) and a non-modular windshield connection element (ER) provided for association with said plurality of modular elements, said non-modular elements (EA,ER) being so arranged as to adapt the composite middle structure to different vehicle types and having such a shape and dimension related to the corresponding shape and dimensions of each individual motorvehicle.

2. A dashboard according to Claim 1, wherein said plurality of assemblable modular elements (ES,EI) comprise at least one element intended for accommodating instruments, said at least one element being effective to be positioned either on the left- or right-hand side of the dashboard (P) in accordance with the corresponding location of the drive seat, in combination with one or more central and/or lateral elements, either similar or different.

3. A dashboard according to Claims 1 and 2, characterized in that said pair of non-modular angle elements (EA) and windshield connection element (ER) carry at least the forced air diffusers (D) and defrosting outlets (B), respectively, with related fittings for the air ducting system.

4. A dashboard according to Claims 1 to 3, wherein said non-modular angle elements (EA) have blanks or seats (Sd) for the accommodation of diffusers and/or accessory items, in particular ashtrays, preformed therein.

5. A dashboard according to the preceding claims, wherein a part of the outfitting accessories in the modular and fixed elements (ES,EI) are co-moulded with the respective element.

6. A dashboard according to the preceding claims, characterized in that it is composed by assembling together a plurality of modular elements (ES,EI) selected to form an upper element assembly (ES) and lower element assembly (EI).

7. A dashboard according to the preceding claims, wherein those elements which make up said upper element assembly (ES) comprise a central element and two lateral elements (ESX), at least one whereof is provided with an instrument accommodating space (V).

8. A dashboard accordind to the preceding claims, wherein those elements which make up said lower element assembly (EI) comprise a lateral element (EIX), intended for the drive side, incorporating a tunnel panel (T) for shielding the steering column, at least one central element (EIY) serving for connection to the driveshaft tunnel panel locker, if any, and a second lateral element (EIZ) on the side away from the drive one.

9. A dashboard according to the preceding claims, wherein said assemblable elements (ES,EI) are provided with accessories of various description, in particular accessory items selected from a group including doors (SP),

conditioned air outlets, ashtrays, cigar lighters, wireless sets, clocks.

10. A dashboard according to the preceding claims, wherein each modular component element (ES,EI) and non-modular component element (EA,ER) are injection moulded from a thermoplastics material.

11. A dashboard according to the preceding claims, wherein each component element (ES,EI,EA,ER) incorporates an optional outer covering and an optional intervening foam layer; said covering and intervening layer being assembled by co-moulding with said component element.

12. A dashboard according to the preceding claims, wherein said covering differs between said elements in character, colour, texture, and generic trim elements.

13. A dashboard according to Claims 1 to 10, wherein said outer covering is a single continuous covering, with optional intervening foam, and covers the entire composite dashboard structure as previously assembled.

1/6

0083701

**Fig. 1**

**Fig. 2**

**Fig. 3**

**Fig. 4a**

**Fig. 4b**

**Fig. 5a**

**Fig. 5b**

**Fig. 5c**

0083701

Fig. 6a

Fig. 6b

Fig. 6c

Fig. 6d

Fig. 6e

Fig. 6F

Fig. 7a

**Fig. 7b**

**Fig. 7c**

**Fig. 7d**

ESX

ER

RV

N

N

RV

RV

RV

RV

RV

T

EIX

ER

N

N

N

N

N

RV

ST

ST

ESX

ESY

Fig. 10

Fig. 9

6/6

Fig. 8

B

ESX

ER

ESY

ESY

B

Sd

Sd

EA

EIX

EIZ

EIY

EA

0083701